# FASCICULE DE BREVET EUROPEEN

(11) **EP 0 629 532 B1**
(45) Date de publication et mention de la délivrance du brevet: **18.12.1996**
(21) Numéro de dépôt: 94400915.8
(22) Date de dépôt: 27.04.1994
(51) Int. Cl.: B60R 25/04

(54) **Dispositif de protection contre le vol, par exemple d'un véhicule automobile**
Vorrichtung zum Schutz gegen Diebstahl, beispielsweise eines Kraftfahrzeugs
Device for protection against theft, for example of an automobile

(30) Priorité: 14.06.1993 FR 9307142
(43) Date de publication de la demande: 21.12.1994
(73) Titulaire: AUTOMOBILES PEUGEOT, 75116 Paris (FR); AUTOMOBILES CITROEN, 92200 Neuilly-sur-Seine (FR)
(72) Inventeur: Plouzennec, Thierry, F-92500 Rueil-Malmaison (FR); Riou, Daniel, F-92210 St Cloud (FR)
(74) Mandataire: Habasque, Etienne Joel Jean-François

(56) Documents cités:
- EP-A- 0 232 974
- EP-A- 0 335 166
- FR-A- 2 609 086
- FR-A- 2 661 878
- US-A- 4 209 709

## Description

La présente invention concerne un dispositif de protection contre le vol, notamment d'un véhicule automobile.

Plus particulièrement, le dispositif selon l'invention se rapporte à la protection contre le vol d'un véhicule automobile comportant un moteur sur lequel est fixée une pompe d'injection de carburant associée à une électrovanne de coupure de l'alimentation du moteur en carburant, dont le fonctionnement est piloté par des moyens de commande reliés au reste des circuits de protection du véhicule.

On a déjà décrit dans le document FR-A-2 609 086, aux noms des Demanderesses, un dispositif de protection contre le vol d'un véhicule automobile, muni d'un dispositif électronique de contrôle d'un organe du véhicule tel que le moteur.

Un tel dispositif comporte un clavier d'introduction d'un code d'utilisateur et des moyens de comparaison de ce code d'utilisateur à un code de déverrouillage stocké dans une mémoire du dispositif, pour déverrouiller le dispositif électronique de contrôle en cas de coincidence entre le code d'utilisateur et le code de déverrouillage stocké.

D'autres dispositifs de protection pour véhicule automobile, par exemple par coupure inviolable de l'alimentation en combustible du moteur de celui-ci, ont également été décrits par exemple dans le document FR-A-2 661 878 (dont les caractéristiques correspondent au préambule de la revendication 1).

Dans le dispositif décrit dans ce document, l'organe du véhicule qui est contrôlé est une électrovanne de coupure de l'alimentation en carburant du moteur.

Cependant, ces dispositifs présentent un certain nombre d'inconvénients car la protection ne concerne que l'alimentation électrique de l'électrovanne de coupure de l'injection de carburant.

Il est alors relativement facile d'accéder à cette électrovanne ou aux moyens de commande correspondants pour les remplacer en vue du vol du véhicule.

Le but de l'invention est donc de résoudre ces problèmes en proposant un dispositif de protection qui soit simple et fiable.

A cet effet, l'invention a pour objet un dispositif de protection contre le vol d'un véhicule automobile, du type comportant un moteur sur lequel est fixée une pompe d'injection de carburant associée à une électrovanne de coupure de l'alimentation du moteur en carburant, dont le fonctionnement est piloté par des moyens de commande reliés au reste des circuits du véhicule, l'électrovanne et les moyens de commande étant protégés contre les détériorations par un capotage, caractérisé en ce que le capotage est fixé sur la pompe d'injection à l'aide de moyens de fixation dont au moins une partie s'étend en regard du moteur lorsque la pompe est montée sur celui-ci, afin d'être inaccessible et d'empêcher tout démontage de l'électrovanne et/ou des moyens de commande sans démontage de la pompe.

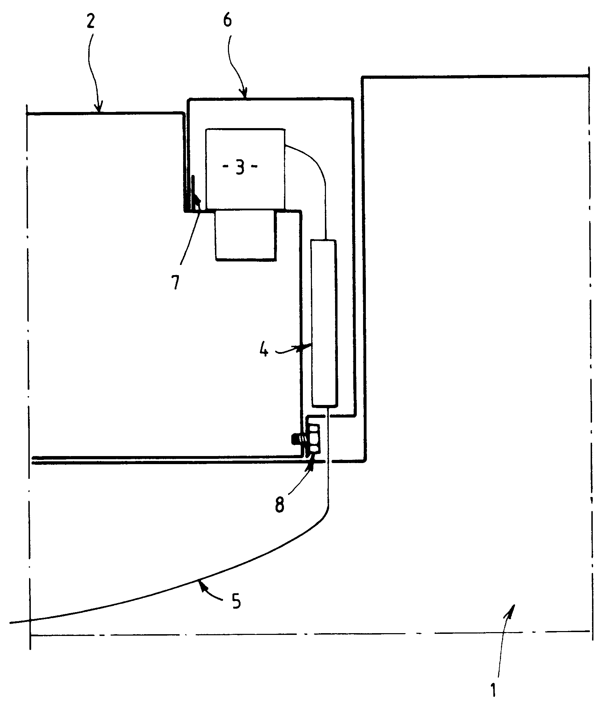

L'invention sera mieux comprise à l'aide de la description qui va suivre, donnée uniquement à titre d'exemple et faite en se référant au dessin annexé, qui représente un schéma synoptique illustrant la structure d'un dispositif de protection suivant l'invention.

Ainsi qu'on peut le voir sur cette figure, le dispositif de protection selon l'invention s'applique à la protection notamment d'un véhicule automobile qui comporte un moteur désigné par la référence générale 1 sur cette figure.

Une pompe d'injection de carburant 2 est fixée sur ce moteur et cette pompe d'injection est associée à une électrovanne 3 de coupure de l'alimentation du moteur en carburant.

Le fonctionnement de cette électrovanne est contrôlé par des moyens de commande 4 reliés au reste des circuits de protection du véhicule par exemple par l'intermédiaire de conducteurs électriques 5.

Ainsi que cela est illustré sur cette figure, l'électrovanne 3 et les moyens de commande 4 sont protégés contre les détériorations par un capotage désigné par la référence 6, ce capotage étant fixé sur la pompe d'injection 2 à l'aide de moyens de fixation par exemple 7 et 8.

Au moins une partie de ces moyens de fixation s'étend en regard du moteur 1 lorsque la pompe 2 est montée sur celui-ci, afin d'être inaccessible et d'empêcher tout démontage de l'électrovanne et/ou des moyens de commande sans démontage de la pompe.

Dans le mode de réalisation illustré sur cette figure, les moyens de fixation 7 sont par exemple constitués par un crochet du capotage adapté pour coopérer avec une patte complémentaire de la pompe 2, tandis que les moyens de fixation 8 sont constitués par exemple par une ou plusieurs vis de fixation.

On conçoit alors que le montage de ce dispositif s'opère de la façon suivante.

L'électrovanne 3 et les moyens de commande 4 de celle-ci, sont tout d'abord montés sur la pompe d'injection 2 avant la fixation de celle-ci sur le moteur.

Le capotage est ensuite mis en position autour de ces éléments sur la pompe 2 et est fixé en position par l'intermédiaire des moyens de fixation 7 et 8.

La pompe d'injection 2 munie de ces différents organes est ensuite fixée sur le moteur et l'on conçoit qu'il est alors impossible de démonter le capotage du fait de l'inaccessibilité des moyens de fixation 8 qui s'étendent en regard du moteur.

Bien entendu, d'autres modes de réalisation de ces moyens de fixation peuvent être envisagés.

Le reste des circuits de protection du véhicule peut présenter une structure analogue à celle du dispositif de protection décrit dans le document FR-A-2 609 086 mentionné précédemment et qui comporte un clavier d'introduction d'un code d'utilisateur, des moyens de conversion des données d'entrée provenant du clavier en un message de sortie contenant ce code d'utilisateur, des moyens progammables et rémanents de mémorisation d'un code de déverrouillage des moyens de commande de l'électrovanne, des moyens de comparaison du code de déverrouillage stocké dans les moyens de mémorisation avec ce code d'utilisateur provenant du clavier et de déverrouillage de l'électrovanne par l'intermédiaire des moyens de commande lors de la coincidence du code de déverrouillage contenu dans les moyens de mémorisation avec le code d'utilisateur.

Cependant, d'autres modes de réalisation de ces circuits peuvent également être envisagés.

## Revendications

1. Dispositif de protection contre le vol d'un véhicule automobile du type comportant un moteur (1) sur lequel est fixée une pompe d'injection de carburant (2) associée à une électrovanne (3) de coupure de l'alimentation du moteur en carburant, dont le fonctionnement est piloté par des moyens de commande (4) reliés au reste des circuits du véhicule, l'électrovanne (3) et les moyens de commande (4) étant protégés contre les détériorations par un capotage (6), caractérisé en ce que le capotage est fixé sur la pompe d'injection (2) à l'aide de moyens de fixation (7,8) dont au moins une partie (8) s'étend en regard du moteur (1) lorsque la pompe (2) est montée sur celui-ci, afin d'être inaccessible et d'empêcher tout démontage de l'électrovanne (3) et/ou des moyens de commande (4) sans démontage de la pompe (2).

2. Dispositif selon la revendication 1, caractérisé en ce que les moyens de fixation comprennent des moyens (7) d'accrochage du capotage sur la pompe (2) et des moyens (8) de fixation par vissage de celui-ci sur cette pompe.

## Claims

1. An anti-theft device for a motor vehicle of the type comprising an engine (1), to which is fixed a fuel injection pump (2) associated with an electromagnetic valve (3) for disconnecting the fuel supply to the engine, the operation of which is controlled by control means (4) connected to the remainder of the circuits of the vehicle, the electromagnetic valve (3) and the control means (4) being protected against damage by a cover (6), characterised in that the cover is fixed to the injection pump (2) by fixing means (7, 8), at least one part (8) of which extends opposite the engine (1) when the pump (2) is mounted thereon so as to be inaccessible and to prevent any disassembly of the electromagnetic valve (3) and/or the control means (4) without removing the pump (2).

2. A device according to claim 1, characterised in that the fixing means comprise means (7) for hooking the cover on the pump (2) and means (8) for screwing the cover to the said pump.

## Patentansprüche

1. Vorrichtung zum Schutz gegen Diebstahl, beispielsweise eines Kraftfahrzeuges, von der Art, welches einen Motor (1) aufweist, an dem eine Einspritzpumpe (2) für den Kraftstoff befestigt ist, die mit einem Magnetventil (3) für die Unterbrechung der Speisung des Motors mit Kraftstoff verbunden ist, dessen Funktion durch Betätigungsmittel (4) gesteuert wird, welche mit den restlichen Kreisen des Kraftfahrzeuges verbunden sind,
**dadurch gekennzeichnet**, **daß**
das Magnetventil (3) und die Betätigungsmittel (4) gegen Beschädigungen mit Hilfe einer Abdeckung (6) geschützt sind, welche an der Einspritzpumpe (2) mit Hilfe von Befestigungsmitteln (7, 8) befestigt ist, von denen sich mindestens ein Teil (8) gegenüber dem Motor (1) erstreckt, wenn die Pumpe (2) an dem letzteren montiert ist, damit sie unzugänglich sind und eine Demontage des Magnetventils (3) und/oder der Betätigungsmittel (4) ohne Demontage der Pumpe (2) verhindern.

2. Vorrichtung nach Anspruch 1,
**dadurch gekennzeichnet**, **daß**
die Befestigungsmittel Mittel (7) für die Verankerung der Abdeckung auf der Pumpe (2), sowie Befestigungsmittel (8) für die Verschraubung der letzteren auf dieser Pumpe enthalten.
